# FASCICULE DE BREVET EUROPEEN

(11) **EP 3 927 953 B1**
(45) Date de publication et mention de la délivrance du brevet: **16.11.2022**
(21) Numéro de dépôt: 20707506.0
(22) Date de dépôt: 31.01.2020
(51) Int. Cl.: F02C 9/32, F02C 9/46, F02C 9/26

(54) **PROCÉDÉ ET SYSTÈME DE COMMANDE D'UN DISPOSITIF DE DOSAGE DE CARBURANT**
VERFAHREN UND SYSTEM ZUR STEUERUNG EINER KRAFTSTOFFMESSVORRICHTUNG
METHOD AND SYSTEM FOR CONTROLLING A FUEL-METERING DEVICE

(30) Priorité: 20.02.2019 FR 1901682
(43) Date de publication de la demande: 29.12.2021
(73) Titulaire: SAFRAN AIRCRAFT ENGINES, 75015 Paris (FR)
(72) Inventeur: JEANNESSON, Florent, 77550 MOISSY-CRAMAYEL (FR); SEEWALD, Boris, 80933 MUNICH (DE); TRAN, Hang-Mi, 77550 MOISSY-CRAMAYEL (FR)
(74) Mandataire: Cabinet Beau de Loménie
(86) Numéro de dépôt international: PCT/FR2020/050167
(87) Numéro de publication internationale: WO 2020/169897

(56) Documents cités:
- WO-A1-2017/194881
- FR-A1- 3 018 098

## Description

### Domaine Technique

L'invention concerne le domaine général des turbomachines. Plus précisément, l'invention concerne un procédé et un système de commande d'un dispositif de dosage de carburant à tiroir pour une chambre de combustion d'une turbomachine. Elle s'applique de manière privilégiée mais non limitative aux turbomachines utilisées dans le domaine de l'aéronautique.

### Technique antérieure

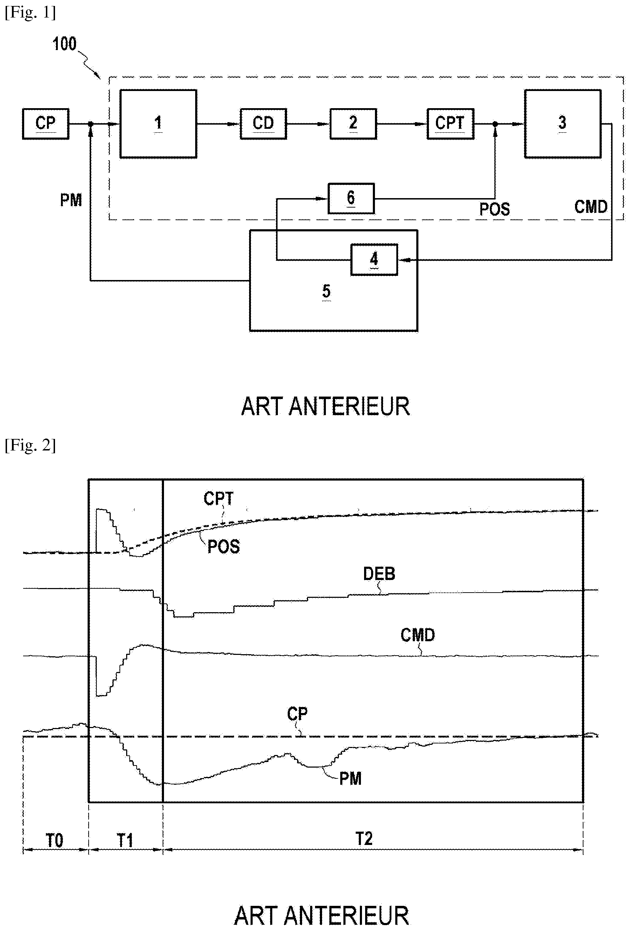

La figure 1 illustre un système de commande 100 d'un dispositif de dosage de carburant selon l'état de l'art. De façon connue, le débit de carburant injecté dans la chambre de combustion d'une turbomachine 5 est déterminé par un dispositif de dosage 4, aussi appelé vanne de dosage (FMV pour « Fuel Metering Valve »). Le dispositif de dosage 4 est muni d'un élément doseur mobile, se présentant par exemple sous la forme d'un organe appelé tiroir qui est déplaçable en translation dans un bâti appelé fourrure, la fourrure étant munie d'une fente de dosage pouvant être plus ou moins obturée par le tiroir. Le débit de carburant dosé est proportionnel à la section non obturée de la fente. Un tel dispositif de dosage est décrit à titre d'exemple dans la demande FR2846711A1.Le débit de carburant injecté par le dispositif de dosage 4 dépend donc de la position de l'élément doseur mobile, par exemple du tiroir, et permet de réguler la puissance délivrée par la turbomachine 5. Selon le type de vanne de dosage, l'élément doseur mobile peut prendre d'autres formes qu'un tiroir, par exemple un boisseau ou une plaque déplaçables en rotation. Dans ce qui suit, le dispositif de dosage 4 est décrit comme une vanne de dosage à tiroir, mais il est entendu que l'invention s'applique à toute vanne de dosage à élément doseur mobile. Le document WO2017/194881 divulgue un dispositif de dosage de carburant selon la technique antérieure.

De manière connue, la position du tiroir du dispositif de dosage 4 est commandée de la manière suivante. Une boucle de contrôle 1 de la puissance de la turbomachine 5 réceptionne une consigne de puissance CP demandée, par exemple réceptionnée suite à une demande du pilote, ainsi qu'une mesure représentative de la de puissance PM de la turbomachine 5. Cette mesure peut être la puissance PM de la turbomachine 5 ou tout autre paramètre représentatif lié à celle-ci, par exemple le régime de rotation d'un arbre (ex : l'arbre basse pression) de celle-ci. La boucle de contrôle 1 détermine alors une consigne de débit CD de carburant à délivrer à la chambre de combustion de la turbomachine 5. Un convertisseur 2 convertit ensuite la consigne de débit CD en une consigne de position CPT du tiroir du dispositif de dosage 4. Une boucle de contrôle 3 de la position du tiroir prend alors pour entrées la consigne de position CPT du tiroir et une position POS du tiroir déterminée afin de calculer un signal de commande CMD pour déplacer le tiroir. Le signal de commande CMD, typiquement un courant de commande d'un actionneur associé au tiroir, est destiné à faire correspondre la position POS du tiroir à la consigne de position CPT, permettant ainsi d'injecter dans la chambre de combustion de la turbomachine 5 un débit de carburant adapté à la consigne de puissance CP demandée.

En pratique, dans une situation nominale, deux capteurs de position distincts mesurent la position du tiroir du dispositif de dosage 4. La position POS du tiroir est alors déterminée à partir d'une moyenne des mesures respectives retournées par ces deux capteurs de position. Un dysfonctionnement de l'un des deux capteurs, bien que peu probable, reste possible. La présente invention concerne ce cas, dans lequel un des deux capteurs reste fonctionnel, c'est-à-dire ne retourne pas de mesures erronées, et ne traite pas le cas très peu probable d'un dysfonctionnement simultané des deux capteurs .En cas de dysfonctionnement de l'un des capteurs de position, la position POS du tiroir est alors déterminée sur la base des mesures de l'autre capteur qui est quant à lui fonctionnel, et éventuellement à l'aide d'une mesure du débit de carburant DEB injecté dans la chambre de combustion de la turbomachine 5.

La technique actuelle de commande de la position POS du tiroir du dispositif de dosage 4 présente néanmoins plusieurs inconvénients qui vont être expliqués en lien avec la figure 2. Cette figure représente pour une même abscisse temporelle les variations respectives en ordonnée de la consigne de position CPT, de la position POS du tiroir, du débit de carburant DEB mesuré, de la puissance mesurée PM de la turbomachine 5 et de sa consigne de puissance CP.

Sur cette figure, on observe initialement, durant une période temporelle T0, que la position POS du tiroir coïncide avec la valeur de consigne de position CPT du tiroir. Par conséquent, la puissance mesurée PM de la turbomachine 5 répond à la consigne de puissance CP demandée. Dans cet exemple, durant cette situation initiale, un des capteurs parmi les deux capteurs de position mesurant la position du tiroir présente déjà un dysfonctionnement qui n'a cependant pas encore été détecté. Néanmoins, malgré la panne de ce capteur, les valeurs de consignes de position du tiroir et de puissance CPT, CP demeurent respectées grâce aux boucles de contrôle 1, 3. Durant cette période initiale T0, la position POS du tiroir est donc initialement déterminée en effectuant la moyenne des mesures retournées par les deux capteurs de position.

Au cours d'une période temporelle T1 consécutive à la période temporelle T0, une logique de détection 6 associée aux capteurs de position détecte une anomalie dans les mesures retournées par l'un des capteurs de position (ex : un signal saturé) et déduit alors un dysfonctionnement de ce capteur. Suite à cette détection, les mesures du capteur présentant un dysfonctionnement, c'est-à-dire détecté comme défaillant, ne sont plus utilisées. La position POS du tiroir est alors par la suite déterminée sur la base des mesures de l'autre capteur qui quant à lui est fonctionnel. Ce changement de méthode pour déterminer la position POS du tiroir s'observe sur la figure 2 par une soudaine augmentation du signal de position POS. Le signal de position POS passe en effet d'une valeur initialement moyennée sur la base des mesures de deux capteurs de position, à une valeur supérieure déterminée à partir du seul capteur fonctionnel. Cette augmentation traduit donc ici le fait que le tiroir présente en réalité une position d'ouverture plus importante qu'initialement évalué durant la période temporelle T0, période pour laquelle la panne d'un des capteurs était déjà effective mais n'était pas encore détectée.

Par conséquent, suite à la détection du dysfonctionnement d'un capteur de position par la logique de détection 6, la position POS du tiroir ne correspond plus au signal de consigne de position CPT du tiroir. Afin de réduire cet écart, la boucle de contrôle 3 de la position du tiroir cherche alors à refermer le tiroir, c'est-à-dire diminuer la valeur du signal de position POS, pour le rapprocher du signal de consigne de position CPT. La commande du tiroir par la boucle de contrôle 3, consiste alors à adapter le signal de commande CMD, ici un courant de commande d'un actionneur associé au tiroir. On observe donc durant la période temporelle T1 une variation du signal de commande CMD élaboré par la boucle de contrôle 3, afin de faire converger la position POS du tiroir vers sa consigne de position CPT.

Durant cette même période temporelle T1, la réduction de l'ouverture du tiroir par la boucle de contrôle 3 afin de converger vers la consigne de position CPT a pour effet direct de diminuer le débit de carburant DEB injecté dans la chambre de combustion de la turbomachine 5. La diminution du débit de carburant DEB entraine alors une diminution temporaire de la puissance fournie par celle-ci. On constate ainsi durant la période temporelle T1 que la puissance PM mesurée de la turbomachine 5 passe en dessous de la consigne de puissance CP demandée et atteint une valeur minimale.

La puissance PM mesurée étant une variable d'entrée de la boucle de contrôle 1 de puissance de la turbomachine 5, cette boucle de contrôle 1 recalcule alors une nouvelle consigne de débit CD à injecter, afin de respecter la consigne de puissance CP requise. Cette consigne de débit est ensuite convertie par le convertisseur 2 en une nouvelle consigne de position CPT du tiroir. Ainsi, la boucle de contrôle 1 corrige indirectement la consigne de position CPT du tiroir afin de réadapter le débit de carburant DEB injecté dans la chambre de combustion et permettre que la puissance de la turbomachine 5 atteigne de nouveau la consigne de puissance CP demandée. On observe ainsi durant les périodes temporelles T1 et T2 une augmentation progressive de la consigne position CPT, liée à la boucle de contrôle 1 de puissance. Celle-ci recalcule en effet une consigne de débit CD de carburant à injecter plus importante, qui une fois convertie par le convertisseur 2, se traduit par une consigne d'ouverture plus importante du tiroir du dispositif de dosage 4. La période temporelle T2 correspond alors à une période de transition durant laquelle la boucle de contrôle 1 de puissance compense la chute momentanée de puissance PM de la turbomachine 5, jusqu'à ce que celle-ci corresponde de nouveau à la consigne de puissance CP attendue.

Le mécanisme ici décrit permet donc de commander la position du tiroir du dispositif de dosage 4, de sorte que la turbomachine 5 fournisse une puissance PM conforme à la consigne de puissance CP demandée. Cependant, comme expliqué ci-dessus, la détection de la panne d'un capteur de position du tiroir du dispositif de dosage 4 peut conduire à observer un écart soudain entre la position POS du tiroir déterminée et sa consigne CP de position. Cet écart déclenche alors un mécanisme de régulation de la part de la boucle de contrôle 3 de position du tiroir qui diminue l'ouverture du tiroir et peut alors temporairement entrainer une diminution de la puissance de la turbomachine 5. Cette diminution de puissance est ensuite rectifiée par la boucle de contrôle 1 de puissance qui recalcule une nouvelle consigne de débit de carburant. Une telle diminution de puissance, même temporaire, n'est cependant pas souhaitable si l'on souhaite bénéficier des performances optimales de la turbomachine 5. Il serait donc souhaitable de limiter tout risque de chute de puissance de la turbomachine 5 suite à la détection d'une panne d'un capteur de position.

### Exposé de l'invention

La présente invention a pour but de remédier aux inconvénients précités. A cet effet, l'invention propose un procédé de commande d'un dispositif de dosage de carburant à élément doseur mobile pour une chambre de combustion d'une turbomachine d'aéronef, ce procédé comprenant au moins deux itérations des étapes suivantes:
a) une étape de détection d'un éventuel changement d'état de fonctionnement d'un capteur de position parmi un premier capteur de position et un second capteur de position mesurant la position de l'élément doseur, l'autre capteur restant fonctionnel, chaque capteur de position étant soit en fonctionnement soir en dysfonctionnement ;
b) si les deux capteurs sont en fonctionnement, une première étape de détermination de la position de l'élément doseur à partir d'une moyenne entre une première mesure de position du premier capteur de position et une deuxième mesure de position du second capteur de position ;
c) si un des deux capteurs de position est en dysfonctionnement, l'autre capteur de position étant en fonctionnement, une seconde étape de détermination de la position de l'élément doseur à partir d'une mesure de position du capteur de position restant en fonctionnement ;
d) une étape de détermination d'une consigne de débit de carburant à fournir à la chambre de combustion à partir d'une consigne de puissance de la turbomachine et d'une mesure de puissance de la turbomachine ;
e) une étape de conversion de la consigne de débit déterminée en une consigne de position de l'élément doseur ;
f) une étape de détermination d'une commande de déplacement de l'élément doseur à partir de la consigne de position de l'élément doseur et de la position déterminée pour l'élément doseur ;
g) une étape de commande de déplacement de l'élément doseur en fonction de la commande de déplacement déterminée.

Si un changement d'état de fonctionnement de l'un des premier et second capteurs de position ou du second capteur de position est détecté au cours de l'étape a), le procédé comprend en outre avant l'étape d) de détermination d'une consigne de débit de l'itération en cours :
h) une étape de calcul d'un premier débit instantané de carburant délivré par le dispositif de dosage à la chambre de combustion à partir de la position de l'élément doseur déterminée à l'étape b) ou c) de l'itération en cours selon l'état de fonctionnement des capteurs de position ;
i) une étape de calcul d'un second débit instantané de carburant délivré par le dispositif de dosage à la chambre de combustion à partir de la position de l'élément doseur déterminée à l'étape b) ou c) de l'itération précédente selon l'état de fonctionnement des capteurs de position lors de l'itération précédente ;
j) une étape de détermination d'un écart de débit de carburant entre le premier débit instantané de carburant calculé à l'étape h) et le second débit instantané de carburant calculé à l'étape i),
et à la suite de l'étape d) de détermination d'une consigne de débit de l'itération en cours :
k) une étape de correction de la consigne de débit déterminée à l'étape d) tenant compte de l'écart de débit déterminé à l'étape j), de manière à faire correspondre la consigne de position de l'élément doseur à la position de l'élément doseur déterminée à l'étape b) ou c) de l'itération en cours selon l'état de fonctionnement des capteurs de position.

En fonctionnement nominal, c'est-à-dire en l'absence du dysfonctionnement d'un capteur de position, la position de l'élément doseur est déterminée à partir d'une moyenne entre une première mesure de position du premier capteur de position et une deuxième mesure de position du second capteur de position. La détection du dysfonctionnement d'un capteur, induit un changement dans la méthode de détermination de la position de l'élément doseur qui est alors déterminée à partir de la mesure de position du capteur de position fonctionnel. Ce changement de détermination de la position de l'élément doseur peut éventuellement induire une variation soudaine de celle-ci. Avantageusement, la méthode ici proposée permet alors d'empêcher un écart entre la position de l'élément doseur déterminée et sa consigne de position. En effet, suite à la détection d'un dysfonctionnement d'un capteur et à la détermination de la position de l'élément doseur à partir du capteur de position fonctionnel, une valeur théorique de débit instantané de carburant correspondant à la position de l'élément doseur est calculée. Cette valeur de débit instantané de carburant calculée est alors utilisée pour déterminer l'écart de débit de carburant entre le débit instantané de carburant calculé et le débit instantané calculé pour l'itération précédente, c'est-à-dire avec la position de l'élément doseur à l'itération précédente, soit avant la détection du changement d'état de fonctionnement d'un des capteurs de position. La consigne de débit est alors corrigée en fonction de cet écart de manière à faire correspondre la consigne de position de l'élément doseur à la position de l'élément doseur. Ainsi, suite à la détection du dysfonctionnement d'un capteur, même si la position de l'élément doseur déterminée présente un écart soudain avec sa position initialement déterminée, la consigne de position de l'élément doseur vient alors correspondre à la position de l'élément doseur. Par conséquent, aucun écart entre la consigne de position de l'élément doseur et la position déterminée de l'élément doseur n'est détecté. Il s'en suit qu'aucune logique de régulation de la position de l'élément doseur ne cherche à réadapter la position de l'élément doseur pour compenser un écart avec la consigne de position, cet écart étant ici nul. Suite à un changement de la méthode de détermination de la position de l'élément doseur, la position de l'élément doseur demeure donc inchangée. Par conséquent, le débit de carburant délivré par le dispositif de dosage à la chambre de combustion demeure constant. Le débit délivré demeurant constant et la position de l'élément doseur correspondant à la consigne de position, la puissance délivrée par la turbomachine demeure également constante et continue de correspondre à la consigne de puissance demandée. Ainsi, suite à la détection du dysfonctionnement d'un capteur de position, un changement de la détermination de la position de l'élément doseur n'impacte pas la puissance délivrée par la turbomachine.

Dans un exemple de réalisation de ce procédé, la détection d'un éventuel changement d'état de fonctionnement d'un capteur de position à l'étape c) est réalisée lorsque l'écart entre la première mesure de position du premier capteur de position et la deuxième mesure de position du second capteur de position est supérieur à un seuil prédéterminé.

Dans un exemple de réalisation de ce procédé, lorsqu'un changement d'état de fonctionnement d'un capteur de position est détecté, la détermination de la position de l'élément doseur à l'étape e) est réalisée à partir des étapes suivantes :
- une étape de calcul d'une position moyenne de l'élément doseur à partir d'une moyenne entre la première mesure de position du premier capteur de position et la deuxième mesure de position du second capteur de position ;
- une étape de calcul d'un débit de carburant estimé comme délivré par le dispositif de dosage à la chambre de combustion pour la position moyenne calculée ; et
- si le débit de carburant calculé est inférieur à un seuil prédéterminé, la détermination de la position de l'élément doseur comme correspondant à la plus grande mesure parmi la première mesure et la deuxième mesure ;
- si le débit de carburant calculé est supérieur à un seuil prédéterminé, la réception d'une mesure relative au débit de carburant délivré par le dispositif de dosage à la chambre de combustion, la détermination d'une position théorique de l'élément doseur correspondant au débit de carburant mesuré, et la détermination de la position de l'élément doseur à partir de la mesure la plus proche de la position théorique parmi la première mesure et la deuxième mesure.

L'invention propose également, selon un autre aspect, un programme d'ordinateur comportant des instructions de code pour la mise en œuvre du procédé résumé ci-dessus lorsqu'il est exécuté par un ordinateur ou un dispositif de calcul en temps réel.

L'invention propose également, selon un autre aspect, un système de commande d'un dispositif de dosage de carburant à élément doseur mobile pour une chambre de combustion d'une turbomachine, ce système comprenant :
- un premier capteur de position et un second capteur de position configurés pour mesurer la position de l'élément doseur du dispositif de dosage;
- des moyens de mesure configurés pour mesurer la puissance de la turbomachine ;
- un module de détection configuré pour détecter un éventuel changement d'état de fonctionnement d'un des capteurs de position parmi le premier capteur de position et le second capteur de position, chaque capteur de position étant soit en fonctionnement soit en dysfonctionnement ;
- un module de sélection configuré pour déterminer
   ∘ si les deux capteurs de position sont en fonctionnement, la position de l'élément doseur à partir d'une moyenne entre une première mesure de position du premier capteur de positon et une deuxième mesure de position du second capteur de position ;
   ∘ si un des deux capteurs de position est en dysfonctionnement, l'autre capteur restant en fonctionnement, à partir d'une mesure de position du capteur de position restant en fonctionnement ;
- un premier module de contrôle configuré pour déterminer une consigne de débit de carburant à fournir à la chambre de combustion à partir d'une consigne de puissance de la turbomachine et de la mesure de puissance de la turbomachine ;
- un convertisseur configuré pour convertir la consigne de débit déterminée en une consigne de position de l'élément doseur ;
- un deuxième module de contrôle configuré pour déterminer une commande de déplacement de l'élément doseur à partir de la consigne de position de l'élément doseur et de la position déterminée pour l'élément doseur ;
- un actionneur configuré pour commander la position de l'élément doseur en fonction de la commande de déplacement déterminée ;
le système comprenant en outre un module de calcul configuré pour, si un changement d'état de fonctionnement du premier ou second capteur de position est détecté par le module de détection, calculer un débit instantané de carburant délivré par le dispositif de dosage à la chambre de combustion à partir de la position de l'élément doseur déterminée, calculer un second débit instantané de carburant délivré par le dispositif de dosage à la chambre de combustion à partir de la position de l'élément doseur précédant la dernière position déterminée, et calculer écart de débit de carburant entre le premier débit instantané de carburant calculé et le second débit instantané de carburant calculé ; et
le premier module de contrôle étant configuré, si un changement d'état de fonctionnement du premier capteur de position ou du second capteur de position est détecté par le module de détection, pour déterminer la consigne de débit en tenant compte en outre de l'écart débit de carburant calculé par le module de calcul, de manière à faire correspondre la consigne de position de l'élément doseur à la position de l'élément doseur déterminée par le module de sélection.

Dans un exemple de réalisation de ce système, le module de détection est configuré pour détecter un éventuel changement d'état de fonctionnement d'un capteur de position lorsque l'écart entre la première mesure de position du premier capteur de position et la deuxième mesure de position du second capteur de position est supérieur à un seuil prédéterminé.

Dans un exemple de réalisation de ce système, lorsque le module de détection détecte un changement d'état de fonctionnement d'un capteur de position, le module de sélection est configuré pour :
- calculer une position moyenne de l'élément doseur à partir d'une moyenne entre la première mesure de position du premier capteur de position et la deuxième mesure de position du second capteur de position ;
- calculer un débit de carburant estimé comme délivré par le dispositif de dosage à la chambre de combustion pour la position moyenne calculée ; et
- si le débit de carburant calculé est inférieur à un seuil prédéterminé, déterminer la position de l'élément doseur comme correspondant à la plus grande mesure parmi la première mesure et la deuxième mesure ;
- si le débit de carburant calculé est supérieur à un seuil prédéterminé, réceptionner une mesure relative au débit de carburant délivré par le dispositif de dosage à la chambre de combustion, déterminer une position théorique de l'élément doseur correspondant au débit de carburant mesuré, et déterminer la position de l'élément doseur à partir de la mesure la plus proche de la position théorique parmi la première mesure et la deuxième mesure.

Dans un exemple de réalisation de ce système, le premier module de contrôle, le convertisseur, le module de détection, le module de sélection, le deuxième module de contrôle et le module de calcul forment des moyens de commande intégrés dans un boitier spécifique ou dans un boitier électronique existant.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
[Fig. 1] La figure 1 est une représentation simplifiée d'un système de commande d'un dispositif de dosage réalisé selon l'état de l'art.
[Fig. 2] La figure 2 illustre les variations temporelles de diverses variables relatives au système de commande de la figure 1.
[Fig. 3] La figure 3 est une représentation simplifiée d'un système de commande d'un dispositif de dosage selon un mode de réalisation.
[Fig. 4] La figure 4 illustre les différentes étapes d'une itération d'un procédé permettant de commander la position du tiroir du dispositif de dosage de la figure 3 selon un mode de réalisation.
[Fig. 5] La figure 5 illustre les variations temporelles de diverses variables relatives au système de commande de la figure 3 selon un mode de réalisation.

### Description des modes de réalisation

L'invention sera décrite ci-après dans le cadre de son application à une turbomachine qui peut être par exemple une turbomachine de moteur de propulsion pour avion, une turbine d'hélicoptère, une turbine industrielle ou une turbine de groupe auxiliaire de puissance (APU).

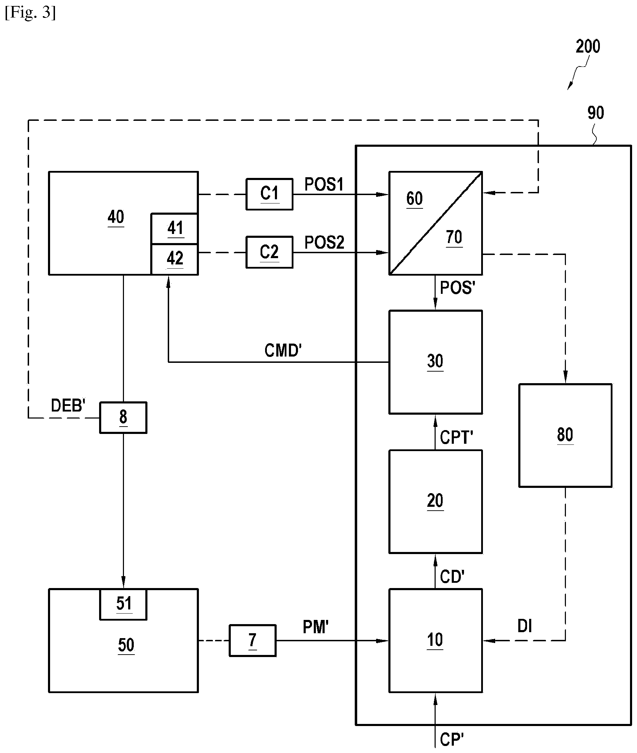

La figure 3 représente un système de commande 200 d'un dispositif de dosage 40 destiné à alimenter en carburant une chambre de combustion 51 d'une turbomachine 50.

Le dispositif de dosage 40, aussi communément appelé « doseur », permet de régler la quantité de carburant fournie par un circuit d'alimentation à la chambre de combustion 51. A cette fin, le dispositif de dosage 40 est muni d'un élément doseur mobile, par exemple d'un tiroir 41 ou vanne de dosage (FMV pour « Fuel Metering Valve» en anglais). La section de passage du carburant, notée S, aussi appelée surface d'ouverture du dispositif de dosage 40, dépend de la position du tiroir 41. Un organe (non représenté) maintient constante la différence de pression de part et d'autre du tiroir 41 et le débit volumique de carburant est donc proportionnel à section S. On notera que la relation entre la section S et la position du tiroir est connue en soi et ne sera pas détaillée davantage.

Ainsi, la commande de déplacement du tiroir 41 permet de réguler le débit de carburant injecté dans la chambre de combustion. Pour ce faire, un actionneur 42 associé au tiroir 41 est configuré pour réceptionner un signal de commande CMD' et déplacer le tiroir 41 de sorte à faire correspondre la position POS' de celui-ci à la position permettant d'obtenir le débit associé à la commande CMD' réceptionnée.

La position POS' du tiroir 41 est, dans une situation nominale, déterminée à partir de la moyenne de deux mesures de position POS1, POS2 respectivement réalisées par deux capteurs de position C1, C2 mesurant de manière indépendante la position du tiroir 41. On entend ici par situation nominale, une situation pour laquelle les deux capteurs de position C1, C2 sont fonctionnels, c'est-à-dire ne présentent aucune anomalie dans les signaux de mesure de position POS1, POS2 qu'ils retournent.

A l'inverse, dans une situation de dysfonctionnement, un des capteurs de position C1, C2 peut présenter, à titre d'exemples non-limitatifs, un signal de position POS1, POS2 saturé, un écart de signal de position POS1, POS2 important vis-à-vis du signal de position POS2, POS1 retourné par l'autre capteur, une absence de signal, ou encore un signal de position POS1, POS2 non-exploitable (par exemple bruité). La discrimination d'un capteur de position C1, C2 fonctionnel d'un capteur de position C2, C1 défaillant peut éventuellement s'appuyer sur une mesure du débit de carburant DEB' délivré par le dispositif de dosage 40 à la chambre de combustion 51 de la turbomachine 50. La mesure de débit de carburant DEB' est réalisée par un débitmètre 8, par exemple un couple mètre, un débitmètre à hélice ou un débitmètre volumique. La détection du dysfonctionnement d'un capteur de position C1, C2 ainsi que la détermination de la position POS1, POS2 du capteur sera détaillée ultérieurement.

Le système de commande 200 comprend en outre des moyens de mesure 7 configurés pour mesurer la puissance PM' fournie par la turbomachine 50. Le signal de mesure de puissance PM' est réceptionné par une logique de contrôle de la puissance de la turbomachine 50, détaillée par la suite, qui détermine si le débit de carburant injecté dans la chambre de combustion 51 de la turbomachine 50 est suffisant, et adapte en conséquence une consigne de débit de carburant à injecter dans la chambre de combustion 51.

Afin de commander la position du tiroir 41 du dispositif de dosage 40, et ainsi réguler le débit de carburant injecté dans la chambre de combustion 51, le système de commande 200 comprend en outre des moyens de commande 90 comprenant un premier module de contrôle 10, un convertisseur 20, un deuxième module de contrôle 30, un module de détection 60, un module de sélection 70 et un module de calcul 80.

Les moyens de commande 90 sont configurés pour exécuter un programme d'ordinateur comprenant des instructions de code conçues pour mettre en œuvre un algorithme de commande de la position du tiroir 41. Ces moyens de commande 90 peuvent être intégrés dans un boîtier spécifique ou dans un boîtier électronique existant. Par exemple, les moyens de commande 90 peuvent faire partie du calculateur ou plus particulièrement, du dispositif de régulation numérique du moteur ECU (Engine Control Unit) ou du dispositif de suivi de l'état de santé moteur EMU (Engine Monitoring Unit).

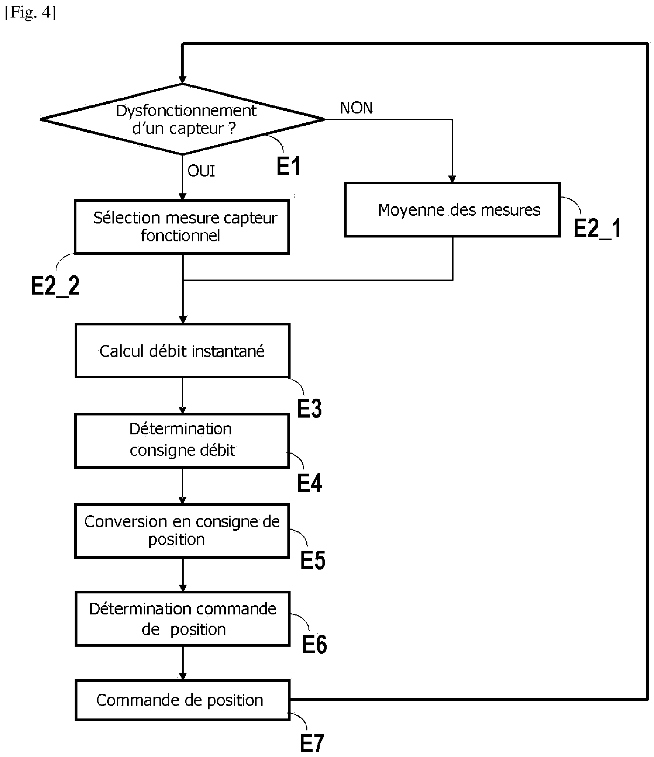

La commande de la position du tiroir 41 du dispositif de dosage 40 est maintenant décrite en lien avec les figures 3 et 4, la figure 4 illustrant les différentes étapes d'une itération d'un procédé permettant de commander la position du tiroir du dispositif de dosage de la figure 3 selon un mode de réalisation.

Au cours d'une première étape E1, le module de détection 60 prend pour entrées les mesures de positions POS1, POS2 respectives des capteurs de position C1, C2 et utilise celles-ci pour détecter une situation éventuelle d'un changement d'état de fonctionnement de l'un de ces capteurs C1, C2, c'est-à-dire une éventuelle situation de dysfonctionnement de l'un de ces capteurs alors que les deux capteurs de position fonctionnait lors de l'itération précédente des étapes de ce procédé ou une éventuelle situation de fonctionnement des deux capteurs alors que l'un des deux capteurs ne fonctionnait plus lors de l'itération précédente des étapes de ce procédé.

Le module de détection 60 détecte à titre d'exemple le dysfonctionnement d'un des capteurs de position C1, C2 si l'un des capteurs retourne un signal de mesure de position POS1, POS2 saturé, ou si les capteurs de position C1, C2 présentent un écart important entre leurs signaux de mesure de position POS1, POS2 respectifs. Ainsi, si l'écart entre une première mesure POS1 du premier capteur de position C1 et une deuxième mesure POS2 du second capteur de position C2 est supérieur à un seuil prédéterminé, le module de détection 60 détecte un dysfonctionnement parmi les capteurs de position C1, C2. L'identification du capteur de position C1, C2 défaillant ou fonctionnel parmi ces deux capteurs est ensuite déterminée par le module de sélection 70.

Le module de sélection 70 est associé au module de détection 60 et détermine, en fonction du résultat de l'étape précédente E1, la position POS' du tiroir 41 du dispositif de dosage 40.

Si le module de détection 60 ne détecte au cours de la première étape E1 aucun dysfonctionnement parmi les capteurs de position C1, C2, le module de sélection 70 détermine au cours d'une étape E2_1 la position POS' du tiroir 41 en effectuant la moyenne d'une première mesure POS1 et d'une deuxième mesure POS2 de la position du tiroir 41 mesurées respectivement par les capteurs de position C1, C2.

A l'inverse, si le module de détection 60 détecte au cours de la première étape E3 un dysfonctionnement parmi les capteurs de position C1, C2, le module de sélection 70 cherche à discriminer le capteur de position C1, C2 fonctionnel du capteur de position C2, C1 présentant un dysfonctionnement. Une fois cette discrimination réalisée, le module de sélection détermine la position POS' du tiroir 41 comme correspondant à la mesure POS1, POS2 de position du capteur de position C1, C2 non-défaillant.

Si l'écart entre une première mesure POS1 du premier capteur de position C1 et une deuxième mesure POS2 du second capteur de position C2 est supérieur à un seuil prédéterminé, l'identification d'un capteur de position C1, C2 défaillant par le module de sélection 70 peut être réalisée de la manière suivante. Si le module de détection détecte un dysfonctionnement d'un capteur C1, C2 de position, le module de sélection 70 calcule alors une position moyenne du tiroir 41 correspondant à la moyenne entre la première mesure de position POS1 issue du premier capteur de position C1 et la deuxième mesure de position POS2 issue du second capteur de position C2. Connaissant, les dimensions géométriques du dispositif de dosage 40 et de son tiroir 41, le module de sélection 70 calcule ensuite un débit de carburant estimé comme délivré par le dispositif de dosage 40 à la chambre de combustion 51, le débit calculé correspondant à la position moyenne calculée du tiroir 41.

Si le débit de carburant calculé est inférieur à un seuil prédéterminé, le module de sélection 70 détermine la position POS' du tiroir comme correspondant à la valeur de mesure la plus grande parmi la première mesure de position POS1 et le deuxième mesure de position POS2. Autrement dit, le capteur de position C1, C2 défaillant est ici déterminé par le module de sélection 70 comme celui retournant la mesure de position POS1, POS2 la plus basse, et seule la mesure de l'autre capteur est prise en considération pour déduire la position POS' courante du tiroir 41.

A l'inverse, si le débit de carburant calculé est supérieur audit seuil prédéterminé, le module de sélection 70 s'appuie sur la mesure de débit de carburant DEB' du débitmètre 8 pour discriminer le capteur de position C1, C2 fonctionnel du capteur de position C2, C1 présentant un dysfonctionnement. Le module de sélection 70 détermine à partir de la mesure de débit de carburant DEB', et connaissant les caractéristiques géométriques du dispositif de dosage 40, une position théorique du tiroir 41 correspondant au débit de carburant DEB' mesuré. Le module de sélection 70 détermine alors la position POS' du tiroir comme correspondant à la mesure de positon POS1, POS2 la plus proche la position théorique calculée. Autrement dit, le module de sélection 70 identifie le capteur fonctionnel comme le capteur de position C1, C2 retournant la mesure POS1, POS2 la plus proche de la position théorique calculée, et seule la mesure de ce capteur est prise en compte, l'autre capteur de position C2, C1 étant alors identifié comme non-fonctionnel par le module de sélection 70.

Comme il peut être compris de la description des étapes E2_1 et E2_2, la détection au cours de l'étape E1 d'un changement d'état de fonctionnement d'un capteur de position C1, C2 entraine un changement dans la détermination de la position POS' du tiroir 41 par les moyens de sélection 70.

Dans l'état de l'art, cette variation, notamment en cas de dysfonctionnement d'un capteur de position alors que les deux fonctionnaient, entrainerait un écart soudain entre la position POS' déterminée du tiroir 41 et la consigne de position CPT'. Cet écart de la position du tiroir 41 induirait alors une compensation par le deuxième module de contrôle 30 afin que la position POS' du tiroir 41 puisse converger vers la consigne de position CPT'. Une telle régulation entrainerait alors une chute momentanée de la puissance de la turbomachine 50.

Afin de parer ce risque, lorsqu'un changement d'état de fonctionnement d'un des capteurs de positon C1, C2 est détecté par le module de détection 60, la consigne de position CPT' est alors modifiée de la manière suivante.

Connaissant les caractéristiques géométriques du dispositif de dosage 40, suite à la détection d'un changement d'état de fonctionnement, le module de calcul 80 calcule alors, au cours d'une étape E3, une première valeur de débit instantané DI de carburant délivré à la chambre de combustion 51, cette valeur correspondant à la position POS' du tiroir 41 déterminée par le module de sélection 70 lors de l'étape E2_1 ou E2_2, une seconde valeur débit instantané de carburant délivré par le dispositif de dosage à la chambre de combustion à partir de la position de l'élément doseur précédant la dernière position déterminée, et un écart de débit de carburant entre le premier débit instantané de carburant calculé et le second débit instantané de carburant calculé. Autrement dit, le module de calcul 80 calcule au cours d'une itération n du procédé, un premier débit instantané correspondant au débit instantané de carburant pour l'itération n en cours, un second débit instantané correspondant au débit instantané de carburant pour l'itération précédente n-1 et l'écart de débit de carburant entre le premier débit et le second débit.

Le premier module de contrôle 10 est une logique de contrôle de la puissance de la turbomachine 50. Le premier module de contrôle 10 a pour objet de s'assurer que la turbomachine 50 fournit bien la puissance demandée. Le premier module de contrôle réceptionne, d'une part, un signal de consigne de puissance CP' pour la turbomachine. La consigne de puissance CP' est à titre d'exemple élaborée en fonction de la position angulaire d'une manette de commande des gaz de l'avion actionnée par un pilote. Le premier module de contrôle réceptionne, d'autre part, le signal de mesure de puissance PM' de la turbomachine 50 mesuré par les moyens de mesure 7. En fonction de l'écart entre la consigne de puissance CP' et la puissance mesurée PM', le premier module de contrôle 10 détermine alors, au cours d'une étape E4, une consigne de débit CD' de carburant à injecter dans la chambre de combustion 51, afin que la turbomachine 50 fournisse une puissance PM' correspondant à la consigne de puissance CP'.

Le premier module de contrôle 10 réceptionne, en tant qu'entrée supplémentaire, l'écart de débit de carburant calculé par le module de calcul 80 et calcule alors, à partir de l'écart de débit de carburant réceptionné, une nouvelle consigne de débit CD' de carburant, de manière à faire correspondre la consigne de position CPT' du tiroir 41 à la position POS' du tiroir déterminée par le module de sélection 70.

L'adaptation de la consigne de débit CD' à partir de l'écart de débit de carburant entre le premier débit instantané DI calculé et le second débit instantané DI' est réalisée par le premier module de contrôle 10 uniquement lorsqu'un changement d'état de fonctionnement d'un capteur de position C1, C2 est détecté. A l'inverse, tant qu'une telle situation de changement d'état de fonctionnement n'est pas identifiée, le premier module de contrôle 10 calcule la consigne de débit CD' uniquement sur la base de la consigne de puissance CP' et de la mesure de puissance PM' de la turbomachine 50.

Afin d'informer le premier module de contrôle 10 de calculer la consigne de débit CD' en tenant compte du débit instantané DI retourné par le module de calcul 80, le module de sélection 70 peut retourner au premier module de contrôle 10 une information relative aux résultats d'une ou plusieurs des étapes E1, E2_1, E2_2, par exemple une chaine de caractère ou un entier numérique.

Au cours d'une étape E5, le convertisseur 20, convertit la nouvelle consigne de débit CD' déterminée par le premier module de contrôle 10, c'est-à-dire la consigne de débit corrigée, en une consigne de position CPT' du tiroir 41 du dispositif de dosage 40. On rappelle que la différence de pression de part et d'autre du tiroir 41 est maintenue constante et que le débit volumique de carburant est donc proportionnel à la section S de passage de carburant. Ainsi, de manière connue, connaissant les caractéristiques géométriques du dispositif de dosage 40, le convertisseur 20 est capable, de déterminer la consigne CPT' de position du tiroir 41 en fonction de la consigne de débit CD' de carburant demandée.

Le deuxième module de contrôle 30 prend pour entrées la position POS' et la consigne de position CPT' du tiroir 41 déterminée par le convertisseur 20 lors de l'étape E5. Le deuxième module de contrôle 30 est une logique de contrôle de la position du tiroir 41 du dispositif de dosage 40. Ce deuxième module de contrôle 30 a pour objet de s'assurer que la position POS' du tiroir 41 corresponde à la consigne de position CPT' demandée. En fonction de l'écart entre la position du tiroir 41 et la consigne de position CPT', le deuxième module de contrôle 30 détermine au cours d'une étape E6 un signal de commande de déplacement CMD' du tiroir 41.

Le signal de commande de déplacement CMD' est utilisé en tant qu'entrée par l'actionneur 42 associé du tiroir 41. Le signal de commande de déplacement CMD' est à titre d'exemple un courant de commande destiné à l'actionneur 42.

Au cours d'une étape E7, suite à la réception du signal de commande de déplacement CMD', l'actionneur 42 déplace le tiroir 41 en fonction de ce signal. Le signal de commande CMD' permet donc à l'actionneur 42 de déplacer le tiroir 41 de manière à ce que sa position POS' corresponde à la consigne de position CPT'.

Les étapes E1 à E7 décrites ci-dessus constituent une itération d'un procédé exécuté par les moyens de commande 90. Ainsi, après exécution de l'étape E7, la succession des étapes E1 à E7 est de nouveau exécutée au cours des itérations suivantes du procédé.

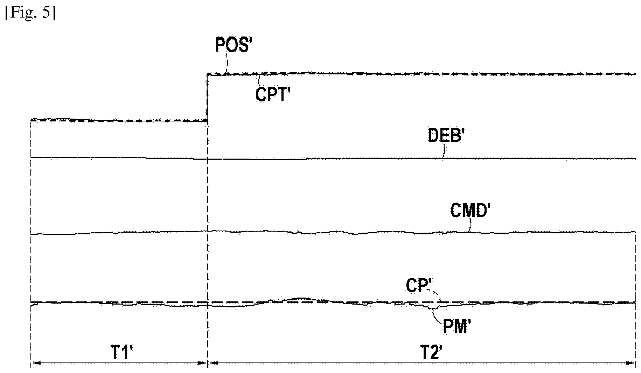

Les avantages des modes de réalisation décrits ci-dessus sont illustrés sur la figure 5. Cette figure illustre pour une même abscisse temporelle les variations respectives en ordonnée de la position POS' déterminée du tiroir 41, de la consigne de position CPT', du débit de carburant DEB' mesuré, du signal de commande CMD' de l'actionneur 42, de la puissance mesurée PM' de la turbomachine 50 et de la consigne de puissance CP'.

Sur cette figure, on observe initialement, durant une période temporelle T1', que la position POS du tiroir 41 coïncide avec la valeur de consigne de position CPT' du tiroir. Par conséquent, la puissance mesurée PM' du moteur répond à la consigne de puissance CP' demandée. Dans cet exemple, durant cette situation initiale, un des capteurs parmi les deux capteurs de position C1, C2 mesurant la position du tiroir 41 présente déjà un dysfonctionnement qui n'a cependant pas encore été détecté par le module de détection 60. Néanmoins, malgré la panne de ce capteur, les valeurs de consignes de position du tiroir et de puissance CPT, CP demeurent respectées grâce aux premier et deuxième module de contrôle 10, 30. Durant la période temporelle T1', la position POS' du tiroir 41 est donc initialement déterminée en effectuant la moyenne des mesures de position POS1, POS2 retournées par les deux capteurs de position C1, C2.

Au début d'une période temporelle T2' consécutive à T1', le module de détection 60 détecte une anomalie dans les mesures retournées par l'un des capteurs de position C1, C2 (ex : un écart important entre les mesures des capteurs) et déduit alors un dysfonctionnement d'un des capteurs. Le module de sélection 70 identifie alors le capteur fonctionnel et le capteur présentant un dysfonctionnement parmi les capteurs de position C1, C2, puis détermine la position POS' réelle du tiroir 41 sur la base de la mesure de position du capteur fonctionnel. On observe donc à l'instant de transition entre les périodes T1' et T2' une augmentation soudaine de la valeur du signal de position POS'. Le module de calcul 80 calcule alors une valeur de débit instantanée DI qu'il fournit au premier module de contrôle 10. Le premier module de contrôle 10 recalcule alors, à partir de la valeur de débit instantané DI, la consigne de débit CD' de carburant de manière à ce que la consigne de position CPT' du tiroir corresponde à la valeur de position POS' du tiroir 41. Ainsi, on observe sur la figure 5 que la consigne de position CPT' change également et vient correspondre à la valeur du signal de position POS'. Lors des itérations suivantes du procédé, compte tenu du fait que la position POS' du tiroir 41 corresponde à la consigne de position CPT', le deuxième module de contrôle 30 ne cherche pas à réadapter la position POS' du tiroir 41. Le signal de commande CMD' généré par ce module demeure alors constant. La position du tiroir demeurant inchangée, la mesure du débit de carburant DEB' délivré par le dispositif de dosage 40 à la chambre de combustion 51 de la turbomachine 50 demeure également constant. Le débit délivré demeurant constant et la position POS' du tiroir 41 correspondant à la consigne de position CPT', la puissance mesurée PM' fournie par la turbomachine 50 demeure également constante et répond bien à la consigne de puissance CP' demandée. Ainsi, suite à la détection du dysfonctionnement d'un capteur de position C1, C2, le changement de la détermination de la position POS' n'impacte pas la puissance délivrée par la turbomachine 50.

## Revendications

1. Procédé de commande d'un dispositif de dosage (40) de carburant à élément doseur (41) mobile pour une chambre de combustion (51) d'une turbomachine (50) d'aéronef, ce procédé comprenant au moins deux itérations des étapes suivantes:
a- une étape de détection (E1) d'un éventuel changement d'état de fonctionnement d'un capteur de position (C1, C2) parmi un premier capteur de position (C1) et un second capteur de position (C2) mesurant la position de l'élément doseur (41), chaque capteur de position (C1, C2) étant soit en fonctionnement soit en dysfonctionnement ;
b- si les deux capteurs de position (C1, C2) sont en fonctionnement, une première étape de détermination (E2_1) de la position (POS') de l'élément doseur (41) à partir d'une moyenne entre une première mesure de position (POS1) du premier capteur de position (C1) et une deuxième mesure de position (POS2) du second capteur de position (C2) ;
c- si un des deux capteurs de position (C1, C2) est en dysfonctionnement, l'autre capteur de position (C1, C2) restant en fonctionnement, une seconde étape de détermination (E2_2) de la position (POS') de l'élément doseur (41) à partir d'une mesure de position du capteur de position (C1, C2) restant en fonctionnement ;
d- une étape de détermination (E4) d'une consigne de débit (CD') de carburant à fournir à la chambre de combustion (51) à partir d'une consigne de puissance (CP') de la turbomachine (50) et d'une mesure de puissance (PM') de la turbomachine (50) ;
e- une étape de conversion (E5) de la consigne de débit (CD') déterminée en une consigne de position (CPT') de l'élément doseur (41) ;
f- une étape de détermination (E6) d'une commande de déplacement (CMD') de l'élément doseur (41) à partir de la consigne de position (CPT') de l'élément doseur (41) et de la position (POS') déterminée pour l'élément doseur (41) ;
g- une étape de commande (E7) de la position (POS') de l'élément doseur (41) en fonction de la commande de déplacement (CMD') déterminée ; **caractérisé en ce que**, si un changement d'état de fonctionnement de l'un des premier et second capteurs de position (C1, C2) est détecté au cours de l'étape a), le procédé comprend en outre avant l'étape d) de détermination d'une consigne de débit (CD') de l'itération en cours :
h- une étape de calcul d'un premier débit instantané (DI) de carburant délivré par le dispositif de dosage (40) à la chambre de combustion (51) à partir de la position (POS') de l'élément doseur (41) déterminée à l'étape b) ou c) de l'itération en cours selon l'état de fonctionnement des capteurs de position (C1, C2) ;
i- une étape de calcul d'un second débit instantané (DI-) de carburant délivré par le dispositif de dosage (40) à la chambre de combustion (51) à partir de la position (POS') de l'élément doseur (41) déterminée à l'étape b) ou c) de l'itération précédente selon l'état de fonctionnement des capteurs de position (C1, C2) lors de l'itération précédente ;
j- une étape de détermination d'un écart de débit de carburant entre le premier débit instantané (DI) de carburant calculé à l'étape h) et le second débit instantané (DI-) de carburant calculé à l'étape i),
et à la suite de l'étape d) de détermination d'une consigne de débit de l'itération en cours :
une étape de correction de la consigne de débit (CD') déterminée à l'étape d) tenant compte de l'écart de débit déterminé à l'étape j), de manière à faire correspondre la consigne de position (CPT') de l'élément doseur (41) à la position (POS) de l'élément doseur (41) déterminée à l'étape b) ou c) de l'itération en cours selon l'état de fonctionnement des capteurs de position (C1, C2).

2. Procédé de commande selon la revendication 1, dans lequel la détection d'un éventuel changement d'état de fonctionnement d'un capteur de position (C1, C2) à l'étape a) est réalisée lorsque l'écart entre la première mesure de position (POS1) du premier capteur de position (C1) et la deuxième mesure de position (POS2) du second capteur de position (C2) est supérieur à un seuil prédéterminé.

3. Procédé de commande selon la revendication 2, dans lequel, lorsqu'un changement d'état de fonctionnement d'un capteur de position (C1, C2) est détecté, la détermination de la position de l'élément doseur (41) à l'étape c) est réalisée à partir des étapes suivantes :
- une étape de calcul d'une position moyenne de l'élément doseur (41) à partir d'une moyenne entre la première mesure de position (POS1) du premier capteur de position (C1) et la deuxième mesure de position (POS2) du second capteur de position (C2) ;
- une étape de calcul d'un débit de carburant estimé comme délivré par le dispositif de dosage (40) à la chambre de combustion (51) pour la position moyenne calculée ; et
- si le débit de carburant calculé est inférieur à un seuil prédéterminé, la détermination de la position de l'élément doseur (41) comme correspondant à la plus grande mesure parmi la première mesure de position (POS1) et la deuxième mesure de position (POS2) ;
- si le débit de carburant calculé est supérieur à un seuil prédéterminé, la réception d'une mesure relative au débit de carburant (DEB') délivré par le dispositif de dosage (40) à la chambre de combustion (51), la détermination d'une position théorique de l'élément doseur (41) correspondant au débit de carburant (DEB') mesuré, et la détermination de la position (POS') de l'élément doseur (41) à partir de la mesure la plus proche de la position théorique parmi la première mesure de position (POS1) et la deuxième mesure de position (POS2).

4. Programme d'ordinateur comportant des instructions de code pour la mise en œuvre du procédé selon l'une quelconque des revendications 1 à 3 lorsqu'il est exécuté par un ordinateur.

5. Système de commande (200) d'un dispositif de dosage (40) de carburant à élément doseur (41) mobile pour une chambre de combustion (51) d'une turbomachine (50) d'aéronef, ce système comprenant :
- un premier capteur de position (C1) et un second capteur de position (C2) configurés pour mesurer la position (POS1, POS2) de l'élément doseur (41) du dispositif de dosage (40) ;
- des moyens de mesure (7) configurés pour mesurer la puissance (PM') de la turbomachine (50) ;un module de détection (60) configuré pour détecter un éventuel changement d'état de fonctionnement d'un des capteurs de position (C1, C2) parmi le premier capteur de position (C1) et le second capteur de position (C2), chaque capteur de position (C1, C2) étant soit en fonctionnement soit en dysfonctionnement ;
- un module de sélection (70) configuré pour déterminer
∘ si les deux capteurs de position (C1, C2) sont en fonctionnement, la position (POS') de l'élément doseur (41) à partir d'une moyenne entre une première mesure de position (POS1) du premier capteur de position (C1) et une deuxième mesure de position (POS2) du second capteur de position (C2) ;
∘ si un des deux capteurs de position (C1, C2) est en dysfonctionnement, l'autre capteur de position (C1, C2) restant en fonctionnement, la position (POS') de l'élément doseur (41) à partir d'une mesure de position du capteur de position (C1, C2) restant en fonctionnement ;
- un premier module de contrôle (10) configuré pour déterminer une consigne de débit (CD') de carburant à fournir à la chambre de combustion (51) à partir d'une consigne de puissance (CP') de la turbomachine (50) et de la mesure de puissance (PM') de la turbomachine (50) ;
- un convertisseur (20) configuré pour convertir la consigne de débit (CD') déterminée en une consigne de position (CPT') de l'élément doseur (41) ;un deuxième module de contrôle (30) configuré pour déterminer une commande de déplacement (CMD') de l'élément doseur (41) à partir de la consigne de position (CPT') de l'élément doseur (41) et de la position (POS') déterminée pour l'élément doseur (41) ;
- un actionneur (42) configuré pour commander la position de l'élément doseur (41) en fonction de la commande de déplacement (CMD') déterminée ;
le système étant **caractérisé en ce qu'**il comprend un module de calcul (80) configuré pour, si un changement d'état de fonctionnement du premier ou second capteur de position (C1, C2) est détecté par le module de détection (60), calculer un premier débit instantané (DI) de carburant délivré par le dispositif de dosage (40) à la chambre de combustion (51) à partir de la dernière position (POS') de l'élément doseur (41) déterminée, calculer un second débit instantané (DI-) de carburant délivré par le dispositif de dosage (40) à la chambre de combustion (51) à partir de la position de l'élément doseur (41) précédant la dernière position (POS') déterminée, et calculer écart de débit de carburant entre le premier débit instantané (DI) de carburant calculé et le second débit instantané (DI-) de carburant calculé ; et **en ce que** le premier module de contrôle (10) est configuré, si un changement d'état de fonctionnement du premier capteur de position (C1) ou du second capteur de position (C2) est détecté par le module de détection (60), pour déterminer la consigne de débit (CD') en tenant compte en outre de l'écart débit de carburant calculé par le module de calcul (80), de manière à faire correspondre la consigne de position (CPT') de l'élément doseur (41) à la position (POS') de l'élément doseur (41) déterminée par le module de sélection (70).

6. Système de commande (200) selon la revendication 5, dans lequel le module de détection (60) est configuré pour détecter un éventuel changement d'état de fonctionnement d'un capteur de position (C1, C2) lorsque l'écart entre la première mesure de position (POS1) du premier capteur de position (C1) et la deuxième mesure de position (POS2) du second capteur de position (C2) est supérieur à un seuil prédéterminé.

7. Système de commande (200) selon la revendication 6, dans lequel lorsque le module de détection (60) détecte un changement d'état de fonctionnement d'un capteur de position (C1, C2), le module de sélection (70) est configuré pour :
- calculer une position moyenne de l'élément doseur (41) à partir d'une moyenne entre la première mesure de position (POS1) du premier capteur de position (C1) et la deuxième mesure de position (POS2) du second capteur de position (C2) ;
- calculer un débit de carburant estimé comme délivré par le dispositif de dosage (40) à la chambre de combustion pour la position moyenne calculée ; et
- si le débit de carburant calculé est inférieur à un seuil prédéterminé, déterminer la position (POS') de l'élément doseur (41) comme correspondant à la plus grande mesure parmi la première mesure de position (POS1) et la deuxième mesure de position (POS2) ;
- si le débit de carburant calculé est supérieur à un seuil prédéterminé, réceptionner une mesure relative au débit de carburant (DEB') délivré par le dispositif de dosage (40) à la chambre de combustion (51), déterminer une position théorique de l'élément doseur (41) correspondant au débit de carburant (DEB') mesuré, et déterminer la position (POS') de l'élément doseur (41) à partir de la mesure la plus proche de la position théorique parmi la première mesure de position (POS1) et la deuxième mesure de position (POS2).

8. Système de commande (200) selon l'une quelconque des revendications 5 à 7, dans lequel le premier module de contrôle (10), le convertisseur (20), le deuxième module de contrôle (30), le module de détection (60), le module de sélection (70) et le module de calcul (80) forment des moyens de commande (90) intégrés dans un boitier spécifique ou dans un boitier électronique existant.

## Patentansprüche

1. Verfahren zum Steuern einer Treibstoffdosiervorrichtung (40) mit einem beweglichen Dosierelement (41) für eine Brennkammer (51) einer Luftfahrzeug-Turbomaschine (50), wobei das Verfahren mindestens zwei Iterationen der folgenden Schritte umfasst:
a) einen Schritt (E1) zum Detektieren einer eventuellen Betriebszustandsänderung eines Positionssensors (C1, C2) von einem ersten Positionssensor (C1) und einem zweiten Positionssensor (C2), der die Position des Dosierelements (41) misst, wobei jeder Positionssensor (C1, C2) entweder in Betrieb ist oder ausgefallen ist;
b) falls die beiden Positionssensoren (C1, C2) in Betrieb sind, einen ersten Schritt (E2_1) zum Bestimmen der Position (POS') des Dosierelements (41) aus einem Mittelwert zwischen einer ersten Positionsmessung (POS1) des ersten Positionssensors (C1) und einer zweiten Positionsmessung (POS2) des zweiten Positionssensors (C2);
c) falls einer der beiden Positionssensoren (C1, C2) ausgefallen ist, wobei der andere Positionssensor (C1, C2) in Betrieb bleibt, einen zweiten Schritt (E2_2) zum Bestimmen der Position (POS') des Dosierelements (41) aus einer Positionsmessung des in Betrieb bleibenden Positionssensors (C1, C2);
d) einen Schritt (E4) zum Bestimmen eines Durchsatzsollwertes (CD') des Treibstoffs, welcher der Brennkammer (51) bereitgestellt werden soll, aus einem Leistungssollwert (CP') der Turbomaschine (50) und einer Leistungsmessung (PM') der Turbomaschine (50);
e) einen Schritt (E5) zum Umwandeln des bestimmten Durchsatzsollwertes (CD') in einen Positionssollwert (CPT') des Dosierelements (41);
f) einen Schritt (E6) zum Bestimmen einer Bewegungssteuerung (CMD') des Dosierelements (41) aus dem Positionssollwert (CPT') des Dosierelements (41) und der für das Dosierelement (41) bestimmten Position (POS');
g) einen Schritt (E7) zum Steuern der Position (POS') des Dosierelements (41) in Abhängigkeit von der bestimmten Bewegungssteuerung (CMD');
**dadurch gekennzeichnet, dass**, falls eine Betriebszustandsänderung von einem von den ersten und zweiten Positionssensoren (C1, C2) in Schritt a) detektiert wird, das Verfahren ferner vor Schritt d) zum Bestimmen eines Durchsatzsollwertes (CD') der laufenden Iteration umfasst:
h) einen Schritt zum Berechnen eines ersten momentanen Durchsatzes (DI) von Treibstoff, der von der Dosiervorrichtung (40) an die Brennkammer (51) von der Position (POS') des Dosierelements (41) aus, die in Schritt b) oder c) der laufenden Iteration gemäß dem Betriebszustand der Positionssensoren (C1, C2) bestimmt wird, abgegeben wird;
i) einen Schritt zum Berechnen eines zweiten momentanen Durchsatzes (DI-) von Treibstoff, der von der Dosiervorrichtung (40) an die Brennkammer (51) von der Position (POS') des Dosierelements (41) aus, die in Schritt b) oder c) der vorhergehenden Iteration gemäß dem Betriebszustand der Positionssensoren (C1, C2) bei der vorhergehenden Iteration bestimmt wird, abgegeben wird;
j) einen Schritt zum Bestimmen einer Abweichung des Treibstoffdurchsatzes zwischen dem ersten momentanen Treibstoffdurchsatz (DI), der in Schritt h) berechnet wird, und dem zweiten momentanen Treibstoffdurchsatz (DI-), der in Schritt i) berechnet wird,
und im Anschluss an Schritt d) zum Bestimmen eines Durchsatzsollwertes der laufenden Iteration:
einen Schritt zum Korrigieren des Durchsatzsollwertes (CD'), der in Schritt d) bestimmt wird, wobei die Durchsatzabweichung, die in Schritt j) bestimmt wird, berücksichtigt wird, damit der Positionssollwert (CPT') des Dosierelements (41) mit der Position (POS) des Dosierelements (41), die in Schritt b) oder c) der laufenden Iteration gemäß dem Betriebszustand der Positionssensoren (C1, C2) bestimmt wird, übereinstimmt.

2. Steuerverfahren nach Anspruch 1, wobei die Detektion einer eventuellen Betriebszustandsänderung eines Positionssensors (C1, C2) in Schritt a) durchgeführt wird, wenn die Abweichung zwischen der ersten Positionsmessung (POS1) des ersten Positionssensors (C1) und der zweiten Positionsmessung (POS2) des zweiten Positionssensors (C2) größer als eine vorbestimmte Schwelle ist.

3. Steuerverfahren nach Anspruch 2, wobei, wenn eine Betriebszustandsänderung eines Positionssensors (C1, C2) detektiert wird, die Bestimmung der Position des Dosierelements (41) in Schritt c) gemäß den folgenden Schritten durchgeführt wird:
- einem Schritt zum Berechnen einer durchschnittlichen Position des Dosierelements (41) aus einem Mittelwert zwischen der ersten Positionsmessung (POS1) des ersten Positionssensors (C1) und der zweiten Positionsmessung (POS2) des zweiten Positionssensors (C2);
- einem Schritt zum Berechnen eines geschätzten Treibstoffdurchsatzes, wie er von der Dosiervorrichtung (40) an die Brennkammer (51) abgegeben wird, für die berechnete durchschnittliche Position; und
- falls der berechnete Treibstoffdurchsatz kleiner als eine vorbestimmte Schwelle ist, der Bestimmung, dass die Position des Dosierelements (41) der größten Messung von der ersten Positionsmessung (POS1) und der zweiten Positionsmessung (POS2) entspricht;
- falls der berechnete Treibstoffdurchsatz größer als eine vorbestimmte Schwelle ist, dem Empfang einer Messung bezüglich des Durchsatzes (DEB') von Treibstoff, der von der Dosiervorrichtung (40) an die Brennkammer (51) abgegeben wird, der Bestimmung einer theoretischen Position des Dosierelements (41), die dem gemessenen Treibstoffdurchsatz (DEB') entspricht, und der Bestimmung der Position (POS') des Dosierelements (41) aus der Messung, die der theoretischen Position von der ersten Positionsmessung (POS1) und der zweiten Positionsmessung (POS2) am nächsten ist.

4. Computerprogramm, das Codeanweisungen für die Umsetzung des Verfahrens nach einem der Ansprüche 1 bis 3 umfasst, wenn es von einem Computer ausgeführt wird.

5. System (200) zum Steuern einer Treibstoffdosiervorrichtung (40) mit einem beweglichen Dosierelement (41) für eine Brennkammer (51) einer Luftfahrzeug-Turbomaschine (50), wobei das System umfasst:
- einen ersten Positionssensor (C1) und einen zweiten Positionssensor (C2), die dazu konfiguriert sind, die Position (POS1, POS2) des Dosierelements (41) der Dosiervorrichtung (40) zu messen;
- Messmittel (7), die dazu konfiguriert sind, die Leistung (PM') der Turbomaschine (50) zu messen;
- ein Detektionsmodul (60), das dazu konfiguriert ist, eine eventuelle Betriebszustandsänderung eines der Positionssensoren (C1, C2) von dem ersten Positionssensor (C1) und dem zweiten Positionssensor (C2) zu detektieren, wobei jeder Positionssensor (C1, C2) entweder in Betrieb ist oder ausgefallen ist;
- ein Auswahlmodul (70), das dazu konfiguriert ist,
o falls die beiden Positionssensoren (C1, C2) in Betrieb sind, die Position (POS') des Dosierelements (41) aus einem Mittelwert zwischen einer ersten Positionsmessung (POS1) des ersten Positionssensors (C1) und einer zweiten Positionsmessung (POS2) des zweiten Positionssensors (C2) zu bestimmen;
o falls einer der beiden Positionssensoren (C1, C2) ausgefallen ist, wobei der andere Positionssensor (C1, C2) in Betrieb bleibt, die Position (POS') des Dosierelements (41) aus einer Positionsmessung des in Betrieb bleibenden Positionssensors (C1, C2) zu bestimmen;
- ein erstes Steuermodul (10), das dazu konfiguriert ist, einen Durchsatzsollwert (CD') von Treibstoff, welcher der Brennkammer (51) bereitgestellt werden soll, aus einem Leistungssollwert (CP') der Turbomaschine (50) und der Leistungsmessung (PM') der Turbomaschine (50) zu bestimmen;
- einen Wandler (20), der dazu konfiguriert ist, den bestimmten Durchsatzsollwert (CD') in einen Positionssollwert (CPT') des Dosierelements (41) umzuwandeln;
- ein zweites Steuermodul (30), das dazu konfiguriert ist, eine Bewegungssteuerung (CMD') des Dosierelements (41) aus dem Positionssollwert (CPT') des Dosierelements (41) und der für das Dosierelement (41) bestimmten Position (POS') zu bestimmen;
- ein Stellglied (42), das dazu konfiguriert ist, die Position des Dosierelements (41) in Abhängigkeit von der bestimmten Bewegungssteuerung (CMD') zu steuern;
wobei das System **dadurch gekennzeichnet ist, dass** es ein Rechenmodul (80) umfasst, das dazu konfiguriert ist, falls eine Betriebszustandsänderung des ersten oder zweiten Positionssensors (C1, C2) von dem Detektionsmodul (60) detektiert wird, einen ersten momentanen Durchsatz (DI) von Treibstoff, der von der Dosiervorrichtung (40) an die Brennkammer (51) abgegeben wird, von der letzten bestimmten Position (POS') des Dosierelements (41) aus, zu berechnen, einen zweiten momentanen Durchsatz (DI-) von Treibstoff, der von der Dosiervorrichtung (40) an die Brennkammer (51) abgegeben wird, von der Position des Dosierelements (41) aus, die der letzten bestimmten Position (POS') vorhergeht, zu berechnen, und eine Abweichung des Treibstoffdurchsatzes zwischen dem berechneten ersten momentanen Treibstoffdurchsatz (DI) und dem berechneten zweiten momentanen Treibstoffdurchsatz (DI-) zu berechnen; und
dass das erste Steuermodul (10) dazu konfiguriert ist, falls eine Betriebszustandsänderung des ersten Positionssensors (C1) oder des zweiten Positionssensors (C2) von dem Detektionsmodul (60) detektiert wird, den Durchsatzsollwert (CD') unter Berücksichtigung ferner der Abweichung des Treibstoffdurchsatzes, der von dem Rechenmodul (80) berechnet wird, zu bestimmen, damit der Positionssollwert (CPT') des Dosierelements (41) mit der Position (POS') des Dosierelements (41), die von dem Auswahlmodul (70) bestimmt wird, übereinstimmt.

6. Steuersystem (200) nach Anspruch 5, wobei das Detektionsmodul (60) dazu konfiguriert ist, eine eventuelle Betriebszustandsänderung eines Positionssensors (C1, C2) zu detektieren, wenn die Abweichung zwischen der ersten Positionsmessung (POS1) des ersten Positionssensors (C1) und der zweiten Positionsmessung (POS2) des zweiten Positionssensors (C2) größer als eine vorbestimmte Schwelle ist.

7. Steuersystem (200) nach Anspruch 6, wobei, wenn das Detektionsmodul (60) eine Betriebszustandsänderung eines Positionssensors (C1, C2) detektiert, das Auswahlmodul (70) konfiguriert ist zum:
- Berechnen einer durchschnittlichen Position des Dosierelements (41) aus einem Mittelwert zwischen der ersten Positionsmessung (POS1) des ersten Positionssensors (C1) und der zweiten Positionsmessung (POS2) des zweiten Positionssensors (C2);
- Berechnen eines geschätzten Treibstoffdurchsatzes, wie er von der Dosiervorrichtung (40) an die Brennkammer abgegeben wird, für die berechnete durchschnittliche Position; und
- falls der berechnete Treibstoffdurchsatz kleiner als eine vorbestimmte Schwelle ist, Bestimmen, dass die Position (POS') des Dosierelements (41) der größeren Messung von der ersten Positionsmessung (POS1) und der zweiten Positionsmessung (POS2) entspricht;
- falls der berechnete Treibstoffdurchsatz größer als eine vorbestimmte Schwelle ist, Empfangen einer Messung bezüglich des Durchsatzes (DEB') von Treibstoff, der von der Dosiervorrichtung (40) an die Brennkammer (51) abgegeben wird, Bestimmen einer theoretischen Position des Dosierelements (41), die dem gemessenen Treibstoffdurchsatz (DEB') entspricht, und Bestimmen der Position (POS') des Dosierelements (41) aus der Messung, die der theoretischen Position von der ersten Positionsmessung (POS1) und der zweiten Positionsmessung (POS2) am nächsten ist.

8. Steuersystem (200) nach einem der Ansprüche 5 bis 7, wobei das erste Steuermodul (10), der Wandler (20), das zweite Steuermodul (30), das Detektionsmodul (60), das Auswahlmodul (70) und das Rechenmodul (80) Steuermittel (90) bilden, die in einem spezifischen Gehäuse oder in einem existierenden Elektronikgehäuse integriert sind.

## Claims

1. A method for controlling a fuel metering device (40) with a movable metering element (41) for a combustion chamber (51) of an aircraft turbomachine (50), this method comprising at least two iterations of the following steps:
a- a step of detecting (E1) a possible change in the operating state of a position sensor (C1, C2) among a first position sensor (C1) and a second position sensor (C2) measuring the position of the metering element (41), each position sensor (C1, C2) being either operating or malfunctioning;
b- if the two position sensors (C1, C2) are operating, a first step of determining (E2_1) the position (POS') of the metering element (41) from an average between a first position measurement (POS1) of the first position sensor (C1) and a second position measurement (POS2) of the second position sensor (C2);
c- if one of the two position sensors (C1, C2) is malfunctioning, the other position sensor (C1, C2) remaining in operation, a second step of determining (E2_2) the position (POS') of the metering element (41) from a position measurement of the position sensor (C1, C2) remaining in operation;
d- a step of determining (E4) a flow rate setpoint (CD') of fuel to be provided to the combustion chamber (51) from a power setpoint (CP') of the turbomachine (50) and a power measurement (PM') of the turbomachine (50);
e- a step of converting (E5) the determined flow rate setpoint (CD') into a position setpoint (CPT') of the metering element (41);
f- a step of determining (E6) a command (CMD') of displacement of the metering element (41) from the position setpoint (CPT') of the metering element (41) and the position (POS') determined for the metering element (41);
g- a step of controlling (E7) the position (POS') of the metering element (41) according to the determined displacement command (CMD');
**characterized in that**, if a change in the operating state of one of the first and second position sensors (C1, C2) is detected during step a), the method further comprises before step d) of determining a flow rate setpoint (CD') of the current iteration:
h- a step of calculating a first instantaneous flow rate (DI) of fuel delivered by the metering device (40) to the combustion chamber (51) from the position (POS') of the metering element (41) determined in step b) or c) of the current iteration according to the operating state of the position sensors (C1, C2);
i- a step of calculating a second instantaneous flow rate (DI-) of fuel delivered by the metering device (40) to the combustion chamber (51) from the position (POS') of the metering element (41) determined in step b) or c) of the previous iteration according to the operating state of the position sensors (C1, C2) during the previous iteration;
j- a step of determining a fuel flow rate deviation between the first instantaneous fuel flow rate (DI) calculated in step h) and the second instantaneous fuel flow rate (DI-) calculated in step i),
and following step d) of determining a flow rate setpoint of the current iteration:
a step of correcting the flow rate setpoint (CD') determined in step d) taking into account the flow rate deviation determined in step j), so as to match the position setpoint (CPT') of the metering element (41) with the position (POS) of the metering element (41) determined in step b) or c) of the current iteration according to the operating state of the position sensors (C1, C2).

2. The control method according to claim 1, wherein the detection of a possible change in the operating state of a position sensor (C1, C2) in step a) is carried out when the deviation between the first position measurement (POS1) of the first position sensor (C1) and the second position measurement (POS2) of the second position sensor (C2) is greater than a predetermined threshold.

3. A control method according to claim 2, wherein, when a change in the operating state of a position sensor (C1, C2) is detected, the determination of the position of the metering element (41) in step c) is carried out from the following steps:
- a step of calculating an average position of the metering element (41) from an average between the first position measurement (POS1) of the first position sensor (C1) and the second position measurement (POS2) the second position sensor (C2);
- a step of calculating an estimated flow rate of fuel as delivered by the metering device (40) to the combustion chamber (51) for the calculated average position; and
- if the calculated fuel flow rate is below a predetermined threshold, determining the position of the metering element (41) as corresponding to the largest measurement among the first position measurement (POS1) and the second position measurement (POS2);
- if the calculated fuel flow rate is greater than a predetermined threshold, receiving a measurement relating to the flow rate (DEB') of fuel delivered by the metering device (40) to the combustion chamber (51), determining a theoretical position of the metering element (41) corresponding to the measured fuel flow rate (DEB'), and determining the position (POS') of the metering element (41) from the measurement closest to the theoretical position among the first position measurement (POS1) and the second position measurement (POS2).

4. A computer program including code instructions for implementing the method according to any one of claims 1 to 3 when it is executed by a computer.

5. A system for controlling (200) a fuel metering device (40) with a movable metering element (41) for a combustion chamber (51) of an aircraft turbomachine (50), this system comprising:
- a first position sensor (C1) and a second position sensor (C2) configured to measure the position (POS1, POS2) of the metering element (41) of the metering device (40);
- measuring means (7) configured to measure the power (PM') of the turbomachine (50);
- a detection module (60) configured to detect a possible change in the operating state of one of the position sensors (C1, C2) among the first position sensor (C1) and the second position sensor (C2), each position sensor (C1, C2) being either operating or malfunctioning;
- a selection module (70) being configured to determine
∘ if the two position sensors (C1, C2) are operating, the position (POS') of the metering element (41) from an average between a first position measurement (POS1) of the first position sensor (C1) and a second position measurement (POS2) of the second position sensor (C2);
∘ if one of the two position sensors (C1, C2) is malfunctioning, the other position sensor (C1, C2) remaining in operation, the position (POS1) of the metering element (41) from a position measurement of the position sensor (C1, C2) remaining in operation;
- a first monitoring module (10) configured to determine a flow rate setpoint (CD') of fuel to be provided to the combustion chamber (51) from a power setpoint (CP') of the turbomachine (50) and from the power measurement (PM') of the turbomachine (50);
- a converter (20) configured to convert the determined flow rate setpoint (CD') into a position setpoint (CPT') of the metering element (41);
- a second monitoring module (30) configured to determine a command (CMD') of displacement of the metering element (41) from the position setpoint (CPT') of the metering element (41) and the position (POS') determined for the metering element (41);
- an actuator (42) configured to control the position of the metering element (41) according to the determined displacement command (CMD');
the system being **characterized in that** it comprises a calculation module (80) configured to calculate, if a change in the operating state of the first or second position sensor (C1, C2) is detected by the detection module (60), a first instantaneous flow rate (DI) of fuel delivered by the metering device (40) to the combustion chamber (51) from the last position (POS') of the determined metering element (41), calculate a second instantaneous flow rate (DI-) of fuel delivered by the metering device (40) to the combustion chamber (51) from the position of the metering element (41) preceding the last determined position (POS'), and calculate a fuel flow rate deviation between the first calculated instantaneous fuel flow rate (DI) and the second calculated instantaneous fuel flow rate (DI-); and
**in that** the first monitoring module (10) is configured, if a change in the operating state of the first position sensor (C1) or of the second position sensor (C2) is detected by the detection module (60), to determine the flow rate setpoint (CD') by further taking into account the fuel flow rate deviation calculated by the calculation module (80), so as to match the position setpoint (CPT') of the metering element (41) with the position (POS') of the metering element (41) determined by the selection module (70).

6. A control system (200) according to claim 5, wherein the detection module (60) is configured to detect a possible change in the operating state of a position sensor (C1, C2) when the deviation between the first position measurement (POS1) of the first position sensor (C1) and the second position measurement (POS2) of the second position sensor (C2) is greater than a predetermined threshold.

7. A control system (200) according to claim 6, wherein when the detection module (60) detects a change in the operating state of a position sensor (C1, C2), the selection module (70) is configured to:
- calculate an average position of the metering element (41) from an average between the first position measurement (POS1) of the first position sensor (C1) and the second position measurement (POS2) of the second position sensor (C2);
- calculate an estimated flow rate of fuel as delivered by the metering device (40) to the combustion chamber for the calculated average position; and
- if the calculated fuel flow rate is below a predetermined threshold, determine the position (POS') of the metering element (41) as corresponding to the largest measurement among the first position measurement (POS1) and the second position measurement (POS2);
- if the calculated fuel flow rate is greater than a predetermined threshold, receive a measurement relating to the flow rate (DEB') of fuel delivered by the metering device (40) to the combustion chamber (51), determine a theoretical position of metering element (41) corresponding to the measured fuel flow rate (DEB'), and determine the position (POS') of the metering element (41) from the measurement closest to the theoretical position among the first position measurement (POS1) and the second position measurement (POS2).

8. A control system (200) according to any one of claims 5 to 7, wherein the first monitoring module (10), the converter (20), the second monitoring module (30), the detection module (60), the selection module (70) and the calculation module (80) form control means (90) integrated into a specific unit or in an existing electronic unit.
